# EUROPÄISCHE PATENTANMELDUNG

(11) **EP 3 332 860 A1**
(43) Veröffentlichungstag der Anmeldung: **13.06.2018**
(21) Anmeldenummer: 17206435.4
(22) Anmeldetag: 11.12.2017
(51) Int. Cl.: B01D 53/18, F01N 3/04, F01N 13/00, F01N 13/08, F23J 15/04

(54) **GASWÄSCHER ZUR ENTSCHWEFELUNG VON RAUCHGASEN AUF EINEM SCHIFF**

(30) Priorität: 09.12.2016 DE 102016123939
(71) Anmelder: Babcock Noell GmbH, 97080 Würzburg (DE)
(72) Erfinder: KLÜPFEL, Manfred, 97440 Werneck (DE); BREEGER, Andreas, 21365 Adendorf (DE)
(74) Vertreter: Cohausz & Florack

(57) **Zusammenfassung**

Beschrieben und dargestellt ist ein Gaswäscher (1), insbesondere zur Entschwefelung von Rauchgasen, vorzugsweise zur Installation auf einem Schiff, mit einem Wäschergehäuse (3) und einem unterhalb des Wäschergehäuses (3) angeordneten Gasrohr (2) zum Heranführen des im Wäschergehäuse (3) zu waschenden Gases, wobei das Wäschergehäuse (3) einen durch einen Wäscherboden (7), einen Wäscherkopf (5) und einen zwischen dem Wäscherboden (7) und dem Wäscherkopf (5) vorgesehenen Wäschermantel (6) abgegrenzten Wäscherraum (4) aufweist. Um einen zuverlässigeren Betrieb zu erreichen, ist vorgesehen, dass im Bereich des Wäschermantels (6) eine Gaszuführung (13) zum seitlichen Einleiten von Gas über wenigstes eine Öffnung (19) in den Wäscherraum (4) vorgesehen ist.

## Beschreibung

Die Erfindung betrifft einen Gaswäscher, insbesondere zur Entschwefelung von Rauchgasen, vorzugsweise zur Installation auf einem Schiff, mit einem Wäschergehäuse und einem unterhalb des Wäschergehäuses angeordneten Gasrohr zum Heranführen des im Wäschergehäuse zu waschenden Gases, wobei das Wäschergehäuse einen durch einen Wäscherboden, einen Wäscherkopf und einen zwischen dem Wäscherboden und dem Wäscherkopf vorgesehenen Wäschermantel abgegrenzten Wäscherraum aufweist. Zudem betrifft die Erfindung ein Schiff mit einem derartigen Gaswäscher.

Aus einer beispielsweise motorischen Verbrennung entstehen Rauchgase, die je nach dem verwendeten Brennstoff und je nach der Art der Verbrennung mehr oder weniger große Anteile an Störstoffen aufweisen können. Diese Störstoffe müssen oftmals aus technischen oder genehmigungsrechtlichen Gründen aus dem Rauchgas entfernt werden, was beispielweise mit Hilfe von Gaswäschern erfolgen kann. In den Gaswäschern wird in einem Wäschergehäuse ein Wäscherraum bereitgestellt, der nach außen unter anderem durch einen Wäscherboden, einen Wäscherkopf und einen zwischen dem Wäscherboden und dem Wäscherkopf angeordneten Wäschermantel begrenzt sein kann. In dem Wäscherraum wird eine Waschflüssigkeit versprüht, die die Störstoffe absorbiert. Bedarfsweise findet in der Waschflüssigkeit eine Reaktion zur Umsetzung der absorbierten Störstoffe statt. In einem besonders einfachen Fall kann es sich bei der Waschflüssigkeit um Wasser handeln, dem bedarfsweise Additive oder Reagenzien zugesetzt sind.

In vielen Fällen werden Gaswäscher eingesetzt, um die Fracht an Schwefelverbindungen, insbesondere Schwefeloxiden (SOₓ) im Rauchgas zu reduzieren, mithin die Schwefelverbindungen abzuscheiden. Man spricht in diesem Zusammenhang auch von Entschwefelung oder Rauchgasentschwefelung.

Die Rauchgasentschwefelung erlangt in immer mehr Anwendungsgebieten zunehmend Bedeutung. Eines dieser Anwendungsgebiete ist die Rauchgasentschwefelung auf Schiffen. Bei den Schiffsmotoren, bei denen es sich meist um Schiffsdiesel handelt, die schwefelreichen Brennstoff nutzen, entstehen Rauchgase mit Schwefelgehalten, die nicht ungereinigt an die Umgebung abgegeben werden sollen und/oder dürfen. Somit ist eine Rauchgasreinigung erforderlich. Bei diesen und ähnlichen Fällen besteht eine Herausforderung darin, dass für die Gasreinigung nur ein sehr begrenzter Bauraum zur Verfügung steht. Dies führt dann oftmals dazu, dass Rauchgas über ein Gasrohr von unten und parallel zur Wäscherachse in den Gaswäscher geleitet wird. Dabei werden Einbauten vorgesehen, die ein Eintreten von Waschflüssigkeit in das Gasrohr vermeiden sollen, damit das Waschwasser nicht in den Motor gelangen kann oder anderweitig störend wirkt. Diese Einbauten funktionieren aber nicht immer zufriedenstellend. Dies ist insbesondere bei der Anwendung auf Schiffen oder dergleichen der Fall, da die Anlagen und die Gaswäscher nicht immer optimal ausgerichtet sind oder schwanken können.

Daher liegt der vorliegenden Erfindung die Aufgabe zugrunde, den Gaswäscher und das Schiff jeweils der eingangs genannten Art derart auszugestalten und weiterzubilden, dass ein zuverlässigerer Betrieb erreicht werden kann.

Diese Aufgabe ist bei einem Gaswäscher nach dem Oberbegriff des Anspruchs 1 dadurch gelöst, dass im Bereich des Wäschermantels eine Gaszuführung zum seitlichen Einleiten von Gas über wenigstes eine Öffnung in den Wäscherraum vorgesehen ist.

Zudem ist die genannte Aufgabe gemäß Anspruch 13 durch ein Schiff mit einem Gaswäscher nach einem der Ansprüche 1 bis 12, vorzugsweise zur Reinigung, insbesondere zur Entschwefelung, von Rauchgasen, gelöst.

Durch die Zuführung des zu reinigenden Gases in den Wäscherraum seitlich über den Wäschermantel obwohl das zu reinigende Gas über das Gasrohr von unten zugeführt wird einerseits eine sehr platzsparende Bauweise erreicht und zugleich verhindert, dass das Waschwasser in das Gasrohr gelangt. Damit wird sowohl die Gefahr gebannt, dass die in das Gasrohr gelangende Waschflüssigkeit zu Problemen führt, auch die aus stationären Anlagen bekannte Anordnung des Gasrohrs seitlich zum Gaswäscher und die Anbindung des Gasrohrs seitlich an den Gaswäscher verhindert, was räumlich ungünstig wäre.

Letztlich wird erfindungsgemäß eine Kombination einer Gaszuführung von unten und eine Gaseinleitung von der Seite in einer effektiven und platzsparenden Weise kombiniert, wobei zugleich ein Übertreten von Waschflüssigkeit in das Gasrohr vermieden wird. Dies lässt sich in besonderer Weise vorteilhaft auf einem Schiff nutzen, und zwar dort insbesondere zur Reinigung, vorzugsweise Entschwefelung von Rauchgasen, da dies andernfalls nicht zufriedenstellen gelöst werden kann.

Bei einer ersten besonders bevorzugten Ausgestaltung des Gaswäschers ist die wenigstes eine Öffnung zum seitlichen Einleiten von Gas in den Wäscherraum mit Abstand vom Wäscherboden angeordnet. Auf diese Weise wird sichergestellt, dass sich Waschflüssigkeit auf dem Boden in einem sogenannten Wäschersumpf sammeln kann, ohne dass dabei Waschflüssigkeit in das Gasrohr gelangen kann. Dabei bietet es sich weiter an, wenn der Abstand wenigstens dem zweifachen der Höhe der wenigstens einen Öffnung entspricht. So kann ein hinreichender Abstand zwischen dem sich am unteren Ende des Wäschergehäuses bzw. dem unteren Ende des Wäscherraums bereitgestellt werden. Umso sicherer kann ein Eindringen von Waschflüssigkeit in das Gasrohr verhindert werden, wenn die wenigstens eine Öffnung zum seitlichen Einleiten von Gas in den Wäscherraum in einem Abstand vom Wäscherboden angeordnet ist, der wenigstens dem dreifachen, insbesondere wenigstens dem vierfachen, der Höhe der wenigstens einen Öffnung entspricht. Alternativ oder zusätzlich kann dann auch mehr Waschwasser am unteren Ende des Wäschergehäuses bzw. dem unteren Ende des Wäscherraums bereitgehalten werden.

Um eine möglichst gleichmäßige sowie platzsparende Strömung des zu reinigenden Gases bereitzustellen, bietet es sich an, dass die Gaszuführung mit mehreren Öffnungen zum Einleiten von Gas in den Wäscherraum versehen ist. Die Öffnungen können dann der Einfachheit halber im Wäschermantel vorgesehen sein. Aus Platzgründen ist es weiter bevorzugt, wenn wenigstens zwei, insbesondere wenigstens drei, weiter insbesondere wenigstens vier, Öffnungen zum Einleiten von Gas in den Wäscherraum vorgesehen sind. Mit zunehmender Anzahl an Öffnungen muss zwar apparativ ein zusätzlicher Aufwand betrieben werden. Durch die entsprechende Aufteilung des Gasstroms kann allerdings insgesamt eine sehr raumökonomische Ausgestaltung des Gaswäschers breitgestellt werden. Dies ist insbesondere dann der Fall, wenn die mehreren Öffnungen zum Einleiten von Gas in den Wäscherraum über den Umfang des Wäschermantels verteilt angeordnet sind. Konstruktiv und strömungstechnisch ist es dabei vorteilhaft, wenn die Öffnungen regelmäßig voneinander beabstandet über den Umfang des Wäschermantels verteilt angeordnet sind.

Um dem Wäscherraum das Gas seitlich zuzuführen kann es aus konstruktiver und aus strömungstechnischer Sicht zweckmäßig sein, wenn ein den Mantelbereich wenigstes abschnittsweise umschließender Ringkanal für das in den Wäscher einzuleitende Gas vorgesehen ist. Der Ringkanal muss den Wäschermantel nicht vollständig umfassen, auch wenn dies vielfach zu bevorzugten Ergebnissen führen wird. Der Ringkanal wird also bereits als Ringkanal angesehen, wenn er einen vollständigen Ring bildet und keine umlaufende Strömung ermöglicht. Der Ringkanal erstreckt sich aber in jedem Fall über den weitaus überwiegenden Bereich des Umfangs des Wäschermantels. Hier kommen insbesondere wenigstens 80% oder gar wenigstens 90% des Umfangs in Frage. Von dem Ringkanal geht wenigstens eine Öffnung ab, über die das Gas vom Ringkanal in den Wäscherraum gelangen kann. Vorzugsweise sind jedoch mehrere, insbesondere regelmäßig über den Umfang des Wäschermantels verteilte, Öffnungen zum Einleiten des Gases aus dem Ringkanal in den Wäschermantel vorgesehen. Die Öffnungen können dann wahlweise als im Ringkanal und/oder im Wäschermantel vorgesehen betrachtet werden.

Aus räumlichen Gründen kann wenigstens eine Zuleitung zum Zuleiten des Gases zur Gaszuführung wenigstens abschnittsweise seitlich neben dem Wäschermantel vorgesehen sein. So kann das Gas zweckmäßig vom Gasrohr unterhalb des Wäschergehäuses nach oben zur seitlichen Gaszuführung zum Einleitung des Gases in den Wäscherraum gelangen. Dies ist in besonderem Maße der Fall, wenn sich die wenigstens eine Zuleitung wenigstens abschnittsweise parallel zur Längserstreckung des Wäschergehäuses und/oder des Wäschermantels erstreckt.

Wenn jeder Öffnung zum Einleiten des Gases in den Wäscherraum eine separate Zuleitung zum Zuleiten des Gases zur Gaszuführung zugeordnet ist, können Zuleitungen mit geringen Querschnitten genutzt werden. Dadurch kann letztlich die gesamte Breite des Gaswäschers verringert werden. Dies führt umso mehr zu einem räumlichen Vorteil, wenn wenigstens zwei, vorzugsweise wenigstens drei, insbesondere wenigstens vier Zuleitungen vorgesehen sind. Ebenso können die Zuleitungen besonders platzsparend angeordnet werden, wenn die Zuleitungen regelmäßig voneinander beabstandet um den Umfang des Wäschermantels verteilt angeordnet sind. Für den Fall, dass der Wäschermantel zylindrisch ausgebildet ist sind vier Zuleitungen von besonderem Vorteil. Diese vier Zuleitungen können dann in den freien Ecken eines um den Wäschermantel angeordneten Quadrats vorgesehen sein. Dieser Raum steht ohnehin oft zur Verfügung oder ist nur schwerlich anderweitig zu nutzen.

Wenn zur Aufteilung des zu reinigenden Gasstroms die wenigstens zwei Zuleitungen über eine Abzweigung mit dem Gasrohr verbunden sind, wird eine zweckmäßige Übergabe des zu reinigenden Gases an den Wäscherraum möglich. Zudem kann die Abzweigung zu einer strömungstechnischem Optimierung und damit zu einer Begrenzung des Druckverlust genutzt werden.

Zur Einsparung des knapp bemessenen Bauraums kann das Gasrohr und/oder die wenigstens eine Abzweigung unterhalb des Wäscherbodens vorgesehen sein. Unterhalb meint dabei vorzugsweise nicht oder nur bedingt auch seitlich gegenüber dem Wäscherboden und/oder dem Wäschermantel überstehend. Anders ausgedrückt kann das Gasrohr und/oder die wenigstens eine Abzweigung wenigstens teilweise in einer Projektion des Wäscherbodens nach unten angeordnet sein. Insbesondere im Falle eines zylindrischen Wäschermantels ist es konstruktiv besonders einfach, wenn das Gasrohr und/oder die wenigstens eine Abzweigung wenigstens im Wesentlichen konzentrisch zum Wäscherboden, zum Wäschermantel und/oder zum Wäscherraum, vorgesehen ist.

Um zu vermeiden, dass die Waschflüssigkeit in die Gaszuführung gelangen kann, bietet es sich an, wenn oberhalb der wenigstens einen Öffnung ein in den Wäscherraum ragender Waschflüssigkeitsabweiser an der Innenseite des Wäschermantels vorgesehen ist. Die Waschflüssigkeit kann dann dort vom Wäschermantel weg geleitet werden. Da sich der Waschflüssigkeitsabweiser vorzugsweise in den Wäscherraum hineinerstreckt, wird auch die Waschflüssigkeit in den Wäscherraum abgeleitet. Dies funktioniert besonders gut und zuverlässig, wenn der Waschflüssigkeitsabweiser und/oder die Oberseite des Waschflüssigkeitsabweisers zur Mitte des Wäscherraums hin nach unten geneigt ist. Hier reicht bedarfsweise eine Neigung zur Horizontalen von zwischen 2° bis 15° aus. Gute Ergebnisse wurden mit einem Winkel zwischen 3° und 10°, vorzugsweise etwa 5°, erreicht.

Besonders effektiv ist die Abweisung der Waschflüssigkeit, wenn oberhalb der wenigstens einen Öffnung ein in den Wäscherraum ragender wenigstens im Wesentlichen umlaufender Ring an der Innenseite des Wäschermantels vorgesehen ist. Der Ring kann abschnittsweise unterbrochen sein. Vorzugsweise läuft der Ring ber vollständig an der Innenseite des Wäschermantels um. Dabei ist es auch hinsichtlich des entsprechenden Rings und/oder die Oberseite des Rings bevorzugt, wenn dieser/diese zur Mitte des Wäscherraums hin, vorzugsweise in einem Winkel zur Horizontalen zwischen 2° bis 15°, insbesondere zwischen 3° und 10°, weiter vorzugsweise etwa 5°, nach unten geneigt ist.

Wenn zwischen der wenigstens einen Zuleitung und dem Wäschermantel, vorzugsweise in der Gaszuführung, eine Rinne vorgesehen ist, kann sich darin Waschflüssigkeit sammeln die trotz etwaiger Einbauten aus dem eigentlichen Wäscherraum ausgetreten ist. Damit die Rinne nicht überläuft, kann diese mit einem Abfluss zum Abfluss von aus dem Wäscherraum in die Rinne gelangender Waschflüssigkeit ausgerüstet sein. Dabei ist es besonders zweckmäßig, wenn die Waschflüssigkeit aus der Rinne über den Abfluss zurück in den Wäscherraum geleitet wird. Die Rinne und der Wäscherraum können dann mit einer Leitung verbunden sein.

Der obere Rand der wenigstens einen Zuleitung kann bis wenigstens an den oberen Rand der Rinne heranreichen und/oder den, bedarfsweise oberen, Rand der Rinne wenigstens abschnittsweise bilden. Alternativ oder zusätzlich kann vorgesehen sein, dass der obere Rand der wenigstens einen Zuleitung oberhalb des unteren Rands der wenigstens einen zugeordneten Öffnung zum Einleiten des Gases in den Wäscherraum endet. All diese Ausgestaltungen sorgen einzeln oder in Kombination dafür, dass es für Waschflüssigkeit aus dem Wäscherraum schwieriger wird, in eine Zuleitung damit in das Gasrohr zu gelangen.

Bei einer ersten besonders bevorzugten Ausgestaltung des Schiffs kann eine das Rauchgas erzeugende Verbrennungseinheit vorgesehen sein. Die Verbrennungseinheit kann zum Antrieb des Schiffs oder zur Aufrechterhaltung des gewünschten Betriebs des Schiffs vorgesehen sein. Besonders bevorzugt ist es jedoch, wenn die Verbrennungseinheit ein Motor ist, da dieser sehr oft läuft und große Mengen Rauchgas abgibt, die trotz des beengten Bauraums bedarfsweise gereinigt, insbesondere entschwefelt werden sollen oder müssen. Bei dem Motor kann es sich um die sogenannte Hauptmaschine handeln, die regelmäßig ein Schiffsdiesel ist und dem Antrieb des Schiffs dient. Es kann sich aber alternativ oder zusätzlich auch um wenigstens einen sogenannten Hilfsdiesel, also einen kleineren Dieselmotor, handeln, mit dem Strom und Wärme gewonnen wird. Zur Wärmegewinnung kann auf den Schiff aber auch wenigstens ein Kessel genutzt werden, die der Verbrennung von Brennstoff dienen. Die Kessel können bedarfsweise parallel zu der Hauptmaschine und/oder dem wenigstens einen Hilfsdiesel betrieben werden.

Alternativ oder zusätzlich kann der Gaswäscher als Inline-Wäscher zur Reinigung des gesamten Rauchgases vorgesehen sein. Dies bedeutet, dass keine Bypassleitung für das zu reinigende Gas zum Umgehen des Gaswäschers vorgesehen ist. Der Gaswäscher muss also so ausgelegt werden, dass er die maximale Gasmenge aufnehmen und, bedarfsweise auch in der vorgegebenen Weise bearbeiten kann. Dies führt zu einem wachsenden Platzbedarf, der durch die bereits beschriebenen Vorteile soweit begrenzt werden kann, dass die Installation eines effizienten Gaswäschers trotz des geringen zur Verfügung stehenden Bauraums möglich ist.

Nachfolgend wird die Erfindung anhand einer lediglich ein Ausführungsbeispiel darstellenden Zeichnung näher erläutert. In der Zeichnung zeigt
- Fig. 1: einen Gaswäscher in einer perspektivischen Ansicht,
- Fig. 2: den Gaswäscher aus Fig. 1 in einer Draufsicht von oben,
- Fig. 3: die Abzweigung des Gaswäschers aus Fig. 1 zur Verteilung des Gases von einem Gasrohr auf Zuleitungen in einer Schnittansicht von oben,
- Fig. 4: die Gaszuführung des Gaswäschers aus Fig. 1 in einer schematischen perspektivischen Ansicht,
- Fig. 5: ein erstes Detail der Gaszuführung aus Fig. 4 in einer horizontalen Schnittansicht,
- Fig. 6: ein zweites Detail der Gaszuführung aus Fig. 4 in einer vertikalen Schnittansicht gemäß der Ebene VI-VI aus Fig. 5,
- Fig. 7: ein drittes Detail der Gaszuführung aus Fig. 4 in einer vertikalen Schnittansicht gemäß der Ebene VII-VII aus Fig. 5 und
- Fig. 8: ein drittes Detail der Gaszuführung aus Fig. 4 in einer vertikalen Schnittansicht gemäß der Ebene VIII-VIII aus Fig. 5.

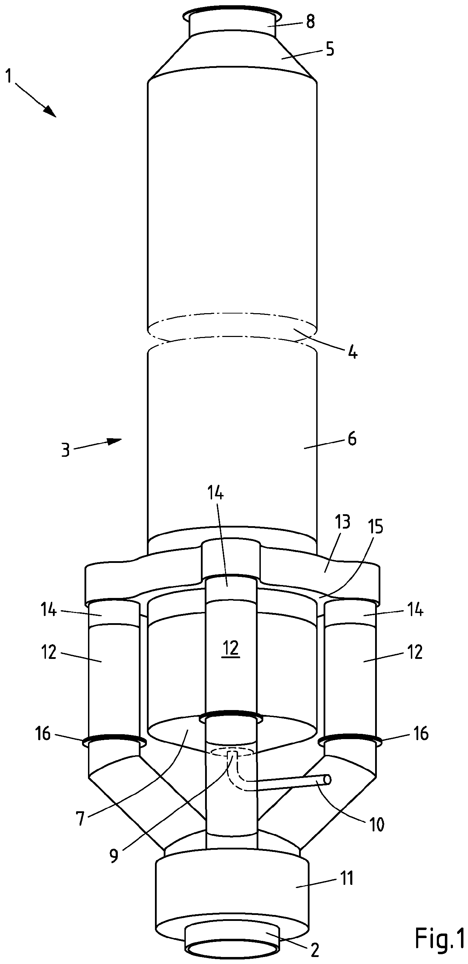

In der Fig. 1 ist ein Gaswäscher 1 zur Entschwefelung von Rauchgas auf einem Schiff dargestellt. Das Rauchgas entsteht dabei beispielsweise in einem Motor oder einem Kessel des Schiffs und wird über ein Gasrohr 2 von unten her zur Gaswäsche geleitet. Das Gasrohr 2 ist zudem unterhalb des Wäschergehäuses 3, und zwar wenigstens im Wesentlichen konzentrisch zum Wäschergehäuse 3 angeordnet. Das Wäschergehäuse 3 ist zudem wenigstens im Wesentlichen vertikal ausgerichtet und schließt einen Wäscherraum 4 ein, in dem eine Waschflüssigkeit verspritzt und wieder gesammelt wird. Zudem kann der Wäscherraum 4 Einbauten wie Düsenböden, Glockenböden, Packungen oder dergleichen aufweisen, um einen intensiven Kontakt zwischen dem Gas und der Waschflüssigkeit sicherzustellen. So wird beispielweise ein ausreichender Stoffaustausch bereitgestellt.

Der Wäscherraum 4 wird nach oben durch einen Wäscherkopf 5, seitlich durch einen Wäschermantel 6 und nach unten durch einen Wäscherboden 7 begrenzt. Am Wäscherkopf 5 ist ein Stutzen 8 vorgesehen, durch den das gereinigte Gas aus dem Wäschergehäuse 3 abgezogen wird. Am Wäscherboden 7 ist ein Stutzen 9 mit einer Leitung 10 vorgesehen, über die die Waschflüssigkeit abgezogen werden kann, um anschließend weiter oben wieder in den Wäscherraum 4 gespritzt zu werden. Entsprechende Anschlüsse sind an dem Wäschergehäuse 3 nicht dargestellt. Es kann sich zudem um einen einstufigen Wäscher oder um einen mehrstufigen Wäscher handeln.

Das Gasrohr 2 ist nicht direkt, sondern indirekt über eine Abzweigung 11, Zuleitungen 12 und eine Gaszuführung 13, mit dem Wäscherraum 4 verbunden. Das über das Gasrohr 2 herantransportierte und zu reinigende Gas gelangt in eine Abzweigung 11, in der das Gas, beim dargestellten und insoweit bevorzugten Gaswäscher, auf vier Zuleitungen 12 verteilt wird. Die Zuleitungen 12 erstrecken sich ausgehend von der Abzweigung 11 zunächst schräg nach außen und sind anschließend teilweise seitlich neben dem Wäschermantel 6 angeordnet. Die oberen Enden 14 der Zuleitung 12 enden in einer Gaszuführung 13, die beim dargestellten und insoweit bevorzugten Gaswäscher 1 einen um den Wäschermantel 6 vollständig umlaufenden Ringkanal 15 bereitstellt. Somit strömt das Gas aus den Zuleitungen 12 in die Gaszuführung 13 und von dort durch den Wäschermantel 6 in den Wäscherraum 4 hinein. Durch die beschriebene Anbindung des Wäscherraums 4 an das Gasrohr 2 wird zuverlässig verhindert, dass Waschflüssigkeit aus dem Wäscherraum 4 versehentlich in das Gasrohr 2 gelangt. Die Waschflüssigkeit könnte dann leicht in den darunter angeordneten Motor oder Kessel des Schiffs gelangen und dort zu Problemen und/oder Schäden führen.

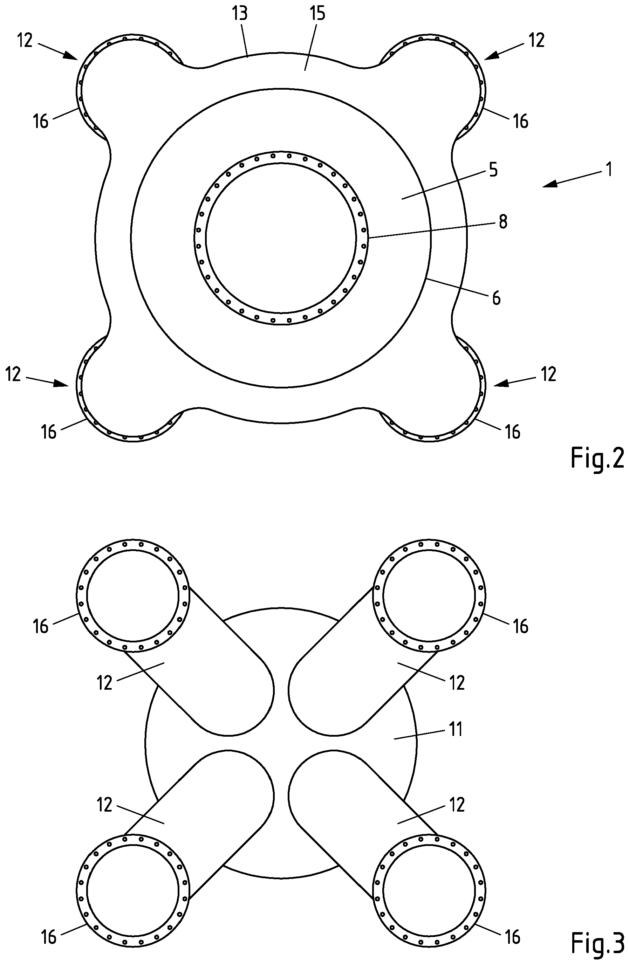

In der Fig. 2 ist eine Draufsicht auf den Gaswäscher 1 von oben dargestellt. In der Mitte ist das eigentliche Wäschergehäuse 3 mit dem konzentrisch angeordneten Stutzen 8 für das gereinigte Gas am Wäscherkopf 5 angeordnet. Die Gaszuführung 13 erstreckt sich weiter unten um den gesamten Wäschermantel 6, wobei gleichmäßig über den Umfang des Wäschermantels 6 verteilt die Zuleitungen 12 mit der Gaszuführung 13 verbunden sind. Die Zuleitungen 12 sind über einen Ringkanal 15 in der Gaszuführung 13 untereinander verbunden. Im Bereich der Gaszuführung 13 weist der Gaswäscher 1 infolge der vier Zuleitungen 12 einen in etwa quadratischen Querschnitt auf.

In der Fig. 3 ist die mit dem Gasrohr 2 verbundene Abzweigung 11 in einer Draufsicht von oben dargestellt. Von der Abzweigung 11 erstrecken sich die vier Zuleitungen 12 zunächst schräg nach oben. Beim dargestellten und insoweit bevorzugten Gaswäscher 1 sind die Zuleitungen 12 zweiteilig ausgebildet, wobei die schrägen und die vertikalen Teile der Zuleitung 12 über Flansche 16 miteinander verbunden sind. Die vertikalen Teile der Zuleitungen 12 sind neben dem Wäschermantel 6 und geringfügig vom Wäschermantel 6 beabstandet angeordnet.

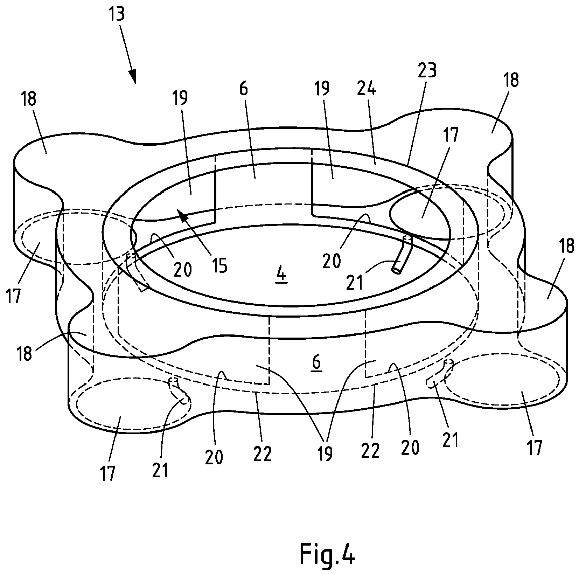

In der Fig. 4 ist die Gaszuführung 13 näher dargestellt. Über den Umfang der Gaszuführung 13 verteilt sind vier Zuführöffnungen 17 zur Aufnahme der oberen Enden 14 der vier Zuleitungen 12 vorgesehen. Angrenzend zu diesen Zuführöffnungen 17 sind Zuführelemente 18 vorgesehen, die untereinander über einen Ringkanal 15 verbunden sind. Der Ringkanal 15 ist zwischen den Zuführelementen 18 nach außen geschlossen. An der Innenseite des Ringkanals 15 sind vier Öffnungen 19 vorgesehen, durch die das Gas durch den Wäschermantel 6 in den Wäscherraum 4 strömen kann. Die vier Öffnungen 19 sind gleichmäßig über den Umfang des Wäschermantels 6 und/oder der Gaszuführung 13 verteilt und jeweils den Zuführelementen 18 und/oder Zuleitungen 12 zugeordnet. Zudem weisen die Öffnungen 19 einen unteren Rand 20 auf, der etwa oberhalb des unteren Rands der Gaszuführung 13 vorgesehen ist. Den Zuleitungen 12 zugeordnet sind zudem vier Abflüsse 21 vorgesehen, und zwar zwischen den Zuleitungen 12 und dem inneren unteren Rand 22 der Gaszuführung 13. Der innere obere Rand 23 der Gaszuführung 13 weist einen umlaufenden, ringförmigen Waschflüssigkeitsabweiser 24 auf, der sich von dem Wäschermantel 6 in den Wäscherraum 4 hinein erstreckt. So wird erreicht, dass die an der Innenseite des Wäschermantels 6 herunter laufende Waschflüssigkeit nicht in den Ringkanal 15 oder die Gaszuführung 13 läuft, sondern nach innen abgeleitet wird. Dennoch in den Ringkanal 15 eintretende Waschflüssigkeit kann über Abflüsse 21 wieder zurück in den Wäscherraum 4 geleitet werden, so dass sich die Waschflüssigkeit in der Gaszuführung 13 nicht ansammelt und daher auch nicht in die Zuleitungen 12 gelangen kann.

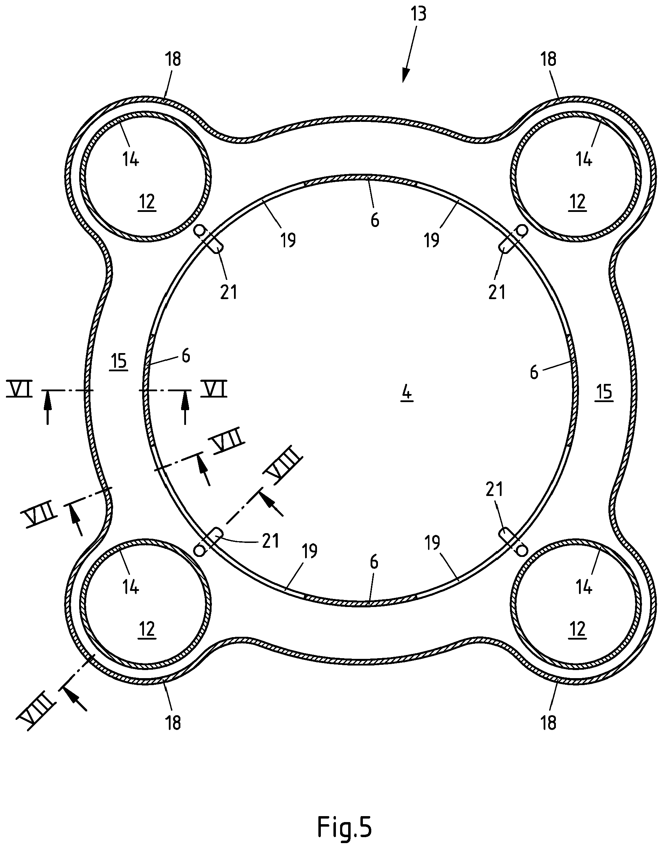

In der Fig. 5 ist ein horizontaler Schnitt durch die Gaszuführung 13 dargestellt. Neben dem Wäschermantel 6, den Öffnungen 19 im Wäschermantel 6 zum Einleiten des zu reinigenden Gases sind auch die oberen Enden 14 der Zuleitungen 12 in den Zuführelementen 18 dargestellt. Zudem sind die Abflüsse 21 für den Abfluss von Waschflüssigkeit aus einem Bereich der Gaszuführung 13 zwischen den Zuleitungen 12 und den Öffnungen 19 zurück in den Wäscherraum 4 im Wäschergehäuse 3 vorgesehen.

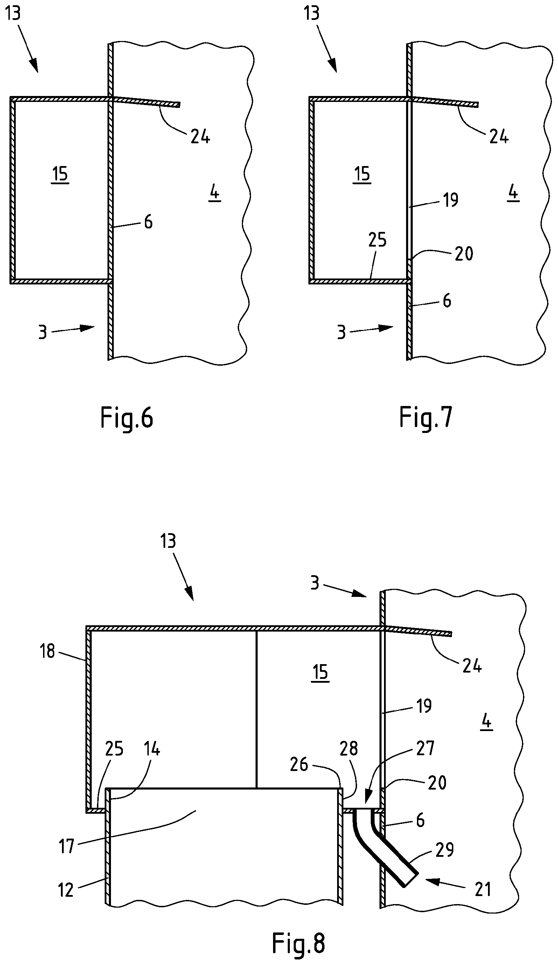

In der Fig. 6 ist ein vertikaler und in radialer Richtung verlaufender Querschnitt durch die Gaszuführung 13 dargestellt, und zwar in einem Bereich zwischen zwei Öffnungen 19. Das zu reinigende Gas kann in diesem Bereich durch den Ringkanal 15 zur nächsten Öffnung 19 strömen. Des Weiteren ist auf der Innenseite des Wäschermantels 6 ein Teil des umlaufenden, ringförmigen Waschflüssigkeitsabweisers 24 dargestellt, der zu seinem inneren Rand leicht nach unten geneigt verläuft, und zwar bei dem dargestellten und insoweit bevorzugten Gaswäscher 1 um etwa 5° zur Horizontalen.

In der Fig. 7 ist ein vertikaler und in radialer Richtung verlaufender Querschnitt durch die Gaszuführung 13 dargestellt, und zwar im Bereich einer Öffnung 19 zum Einleiten des zu reinigenden Gases in den Wäscherraum 4 des Wäschergehäuses 3. Auch in diesem Bereich ist der innen am Wäschermantel 6 umlaufend vorgesehene Waschflüssigkeitsabweiser 24 zu seinem inneren Rand leicht nach unten geneigt. Zudem ist der untere Rand 20 der Öffnung 19 etwas vom unteren Rand und vom Boden 25 der Gaszuführung 13 und/oder des Ringkanals 15 nach oben beabstandet angeordnet.

In der Fig. 8 ist ein vertikaler und in radialer Richtung verlaufender Querschnitt durch die Gaszuführung 13 im Bereich des oberen Endes 14 der Zuleitung 12 und dem Zuführelement 18 dargestellt. Der obere Rand 26 der Zuleitung 12 endet wie die Öffnung 19 zum Einleiten des zu reinigenden Gases in den Wäscherraum 4 etwas oberhalb des unteren Rands der Gaszuführung 13 bzw. dem Boden 25 der Gaszuführung 13 und/oder des Ringkanals 15. So bildet sich zwischen der Öffnung 19 und der zugehörigen Zuleitung 12 eine Rinne 27 aus, deren äußerer Rand 28 bei dem dargestellten und insoweit bevorzugten Gaswäscher 1 durch den unteren Rand 20 der Öffnung 19 und den oberen Rand 26 der Zuleitung 12 gebildet ist. Am Boden 25 der Rinne 27 ist ein Abfluss 21 vorgesehen, der eine Abflussleitung 29 umfasst, die möglicherweise in die Rinne 27 gelangende Waschflüssigkeit durch den Wäschermantel 6 zurück in den Wäscherraum 4 des Wäschergehäuses 3 leitet.

### Bezugszeichenliste

- 1: Gaswäscher
- 2: Gasrohr
- 3: Wäschergehäuse
- 4: Wäscherraum
- 5: Wäscherkopf
- 6: Wäschermantel
- 7: Wäscherboden
- 8: Stutzen
- 9: Stutzen
- 10: Leitung
- 11: Abzweigung
- 12: Zuleitungen
- 13: Gaszuführung
- 14: Ende
- 15: Ringkanal
- 16: Flansch
- 17: Zuführöffnungen
- 18: Zuführelemente
- 19: Öffnung
- 20: unterer Rand
- 21: Abfluss
- 22: innerer unterer Rand
- 23: innere obere Rand
- 24: Waschflüssigkeitsabweiser
- 25: Boden
- 26: obere Rand
- 27: Rinne
- 28: äußerer Rand
- 29: Abflussleitung

## Patentansprüche

1. Gaswäscher (1), insbesondere zur Entschwefelung von Rauchgasen, vorzugsweise zur Installation auf einem Schiff, mit einem Wäschergehäuse (3) und einem unterhalb des Wäschergehäuses (3) angeordneten Gasrohr (2) zum Heranführen des im Wäschergehäuse (3) zu waschenden Gases, wobei das Wäschergehäuse (3) einen durch einen Wäscherboden (7), einen Wäscherkopf (5) und einen zwischen dem Wäscherboden (7) und dem Wäscherkopf (5) vorgesehenen Wäschermantel (6) abgegrenzten Wäscherraum (4) aufweist,
**dadurch gekennzeichnet, dass** im Bereich des Wäschermantels (6) eine Gaszuführung (13) zum seitlichen Einleiten von Gas über wenigstes eine Öffnung (19) in den Wäscherraum (4) vorgesehen ist.

2. Gaswäscher nach Anspruch 1,
**dadurch gekennzeichnet, dass** die wenigstes eine Öffnung (19) zum seitlichen Einleiten von Gas in den Wäscherraum (4) mit Abstand vom Wäscherboden (7) angeordnet ist und dass, vorzugsweise, der Abstand wenigstens dem zweifachen, vorzugsweise wenigstens dem dreifachen, insbesondere wenigstens dem vierfachen, der Höhe der wenigstens einen Öffnung (19) entspricht.

3. Gaswäscher nach Anspruch 1 oder 2,
**dadurch gekennzeichnet, dass** die Gaszuführung (13) mit mehreren, vorzugsweise wenigstens zwei, insbesondere wenigstens drei, weiter insbesondere wenigstens vier, Öffnungen (19) zum Einleiten von Gas in den Wäscherraum (4) vorgesehen ist und dass, vorzugsweise, die mehreren Öffnungen (19) zum Einleiten von Gas in den Wäscherraum (4) über den Umfang des Wäschermantels (6), vorzugsweise regelmäßig voneinander beabstandet, verteilt sind.

4. Gaswäscher nach einem der Ansprüche 1 bis 3,
**dadurch gekennzeichnet, dass** ein den Mantelbereich (6) wenigstes abschnittsweise umschließender Ringkanal (15) für das in den Wäscherraum (4) einzuleitende Gas vorgesehen ist und dass der Ringkanal (15) wenigstens ein, vorzugsweise mehrere, insbesondere regelmäßig über den Umfang des Wäschermantels (6) verteilte, Öffnungen (19) zum Einleiten des Gases aus dem Ringkanal (15) in den Wäscherraum (4) aufweist.

5. Gaswäscher nach einem der Ansprüche 1 bis 4,
**dadurch gekennzeichnet, dass** wenigstens eine Zuleitung (12) zum Zuleiten des Gases zur Gaszuführung (13) wenigstens abschnittsweise seitlich neben dem Wäschermantel (6) vorgesehen ist und dass, vorzugsweise, sich die wenigstens eine Zuleitung (12) wenigstens abschnittsweise parallel zur Längserstreckung des Wäschergehäuses (3) und/oder des Wäschermantels (6), erstreckt.

6. Gaswäscher nach einem der Ansprüche 1 bis 5,
**dadurch gekennzeichnet, dass** jeder Öffnung (19) zum Einleiten des Gases in den Wäscherraum (4) eine separate Zuleitung (12) zum Zuleiten des Gases zur Gaszuführung (13) zugeordnet ist und/oder dass wenigstens zwei, vorzugsweise wenigstens drei, insbesondere wenigstens vier, vorzugsweise regelmäßig voneinander beabstandet, um den Umfang des Wäschermantels (6) verteilt angeordnete Zuleitungen (12) vorgesehen sind.

7. Gaswäscher nach einem der Ansprüche 1 bis 6,
**dadurch gekennzeichnet, dass** die wenigstens zwei Zuleitungen (12) zur Aufteilung eines Gasstroms aus dem Gasrohr (2) über wenigstens eine Abzweigung (11) mit dem Gasrohr (2) verbunden sind.

8. Gaswäscher nach Anspruch 7,
**dadurch gekennzeichnet, dass** das Gasrohr (2) und/oder die wenigstens eine Abzweigung (11) unterhalb des Wäscherbodens (7), vorzugsweise wenigstens teilweise in einer Projektion des Wäscherbodens (7) nach unten, insbesondere wenigstens im Wesentlichen konzentrisch zum Wäscherboden (7), zum Wäschermantel (6) und/oder zum Wäscherraum (4), vorgesehen ist.

9. Gaswäscher nach einem der Ansprüche 1 bis 8,
**dadurch gekennzeichnet, dass** oberhalb der wenigstens einen Öffnung (19) ein in den Wäscherraum (4) ragender Waschflüssigkeitsabweiser (24) an der Innenseite des Wäschermantels (6) vorgesehen ist und dass, vorzugsweise, der Waschflüssigkeitsabweiser (24) und/oder die Oberseite des Waschflüssigkeitsabweisers (24) zur Mitte des Wäscherraums (4) hin, vorzugsweise in einem Winkel zur Horizontalen zwischen 2° bis 15°, insbesondere zwischen 3° und 10°, weiter vorzugsweise etwa 5°, nach unten geneigt ist.

10. Gaswäscher nach einem der Ansprüche 1 bis 9,
**dadurch gekennzeichnet, dass** oberhalb der wenigstens einen Öffnung ein in den Wäscherraum ragender wenigstens im Wesentlichen umlaufender Waschflüssigkeitsabweiser (24) in Form eines Rings an der Innenseite des Wäschermantels (6) vorgesehen ist und dass, vorzugsweise, der Ring und/oder die Oberseite des Rings zur Mitte des Wäscherraums hin, vorzugsweise in einem Winkel zur Horizontalen zwischen 2° bis 15°, insbesondere zwischen 3° und 10°, weiter vorzugsweise etwa 5°, nach unten geneigt ist.

11. Gaswäscher nach einem der Ansprüche 1 bis 10,
**dadurch gekennzeichnet, dass** zwischen der wenigstens einen Zuleitung (12) und dem Wäschermantel (6), vorzugsweise in der Gaszuführung (13), eine Rinne (27) vorgesehen ist und dass, vorzugsweise, ein Abfluss (29) zum Abfluss von aus dem Wäscherraum (4) in die Rinne (27) gelangender Waschflüssigkeit, insbesondere zurück in den Wäscherraum (4), mit der Rinne (27) verbunden ist.

12. Gaswäscher nach einem der Ansprüche 1 bis 11,
**dadurch gekennzeichnet, dass** der obere Rand (26) der wenigstens einen Zuleitung (12) bis wenigstens an den oberen Rand der Rinne (27) heranreicht, vorzugsweise den Rand und/oder den oberen Rand der Rinne wenigstens abschnittsweise bildet, und/oder dass der obere Rand (26) der wenigstens einen Zuleitung (12) oberhalb des unteren Rands (20) der wenigstens einen zugeordneten Öffnung (19) zum Einleiten des Gases in den Wäscherraum (4) endet.

13. Schiff mit einem Gaswäscher (1) nach einem der Ansprüche 1 bis 12, vorzugsweise zur Reinigung, insbesondere zur Entschwefelung, von Rauchgasen.

14. Schiff nach Anspruch 13,
**dadurch gekennzeichnet, dass** das Schiff eine das Rauchgas erzeugende Verbrennungseinheit, insbesondere einen Motor, aufweist.

15. Schiff nach Anspruch 13 oder 14,
**dadurch gekennzeichnet, dass** das der Gaswäscher (1) als Inline-Wäscher zur Reinigung des gesamten Rauchgases vorgesehen ist.
